# EUROPEAN PATENT SPECIFICATION

(11) **EP 0 454 392 B1**
(45) Date of publication and mention of the grant of the patent: **03.07.1996**
(21) Application number: 91303582.0
(22) Date of filing: 22.04.1991
(51) Int. Cl.: B01D 33/073, B01D 33/46, C04B 2/02

(54) **Method for thickening lime sludge**
Verfahren zum Eindicken von Kalkschlamm
Procédé pour l'épaississement d'une bouillie calcaire

(30) Priority: 25.04.1990 FI 902064
(43) Date of publication of application: 30.10.1991
(73) Proprietor: A. AHLSTROM CORPORATION, FIN-29600 Noormarkku (FI)
(72) Inventor: Mattelmaki, Esko, SF-78500 Vakaus (SE)
(74) Representative: Gilmour, David Cedric Franklyn

(56) References cited:
- EP-A- 0 302 184
- US-A- 2 395 098
- US-A- 4 687 583
- WORLD PATENTS INDEX LATEST Accession No 90-057799, Week 08 DERWENT DUBLICATIONS LTD, LONDON, GB & SU-A- 1502120 (DNEPRODZERZH IND.) 23-08-1989
- CHEMICAL ABSTRACTS, vol. 95, no. 16, Columbus, Ohio, USA R.F.MADSEN et al.: "New Method for Increasing Dry Substance in Lime Sludge" C.R. Assem. Gen. Comm. Int. Tech. Sucr., 16th, 231-52, 1979 ref. no. 137971Y

## Description

The present invention relates to a method for thickening lime sludge with a drum filter according to which lime sludge is thickened on a filtering layer formed of the lime sludge on the surface of a filter drum partly immersed in a vat containing lime sludge.

Conventionally, a lime sludge having a dry-solids content of approx. 25% is thickened to a dry-solids content of 70 - 85% with a drum vacuum filter, prior to supplying the lime sludge to a lime sludge reburning kiln. At the beginning of the filtering process, a so-called precoat filter layer of the lime sludge is formed on the surface of the filter drum, the thickness of the layer being normally 10 - 20mm. A scraper is used for scraping off the dried lime sludge from the surface of the precoat. The dried lime sludge falls onto a conveyor and further onto a feed screw which introduces the dried lime sludge into a lime sludge reburning kiln.

The surface layer of the precoat becomes clogged while the filtering proceeds and it must be removed from time to time. The method normally used is to move an automatic scraper gradually inwards according to a certain program whereby the clogged surface layer is removed. After the scraper has moved in several steps closer to the drum the whole precoat is removed and a new precoat formed.

All the movements of the scraper described above and the removal of the precoat from the surface of the drum result in disturbances in the operation of the lime sludge reburning kiln. After the scraper has moved, the filtering of the lime sludge is more efficient and the lime sludge volume bigger for a time. Usually also the dry-solids content of the lime sludge is higher after a movement of the scraper, which results in a change in the operation of the lime sludge reburning kiln. When the whole precoat is renewed the supply of lime sludge to the kiln is stopped for a while which causes a major disturbance in the kiln. Typically, the precoat is replaced once a shift or three times during 24 hours. During a longer period of time, the filter cloth becomes so badly clogged that it must be washed either with an acid or with a high-pressure washer. This operation also causes a longer disturbance or a cut in the production of the lime sludge reburning kiln.

In US-A-3,521,751 of T.H. Holthius a drum with perforated surface 1 is rotatable through a trough 2 containing a mixture 3 and a filter cake 4 builds up of which the outer layer 6 is removed by a knife 5 leaving part of the cake as a filtering layer 7 which eventually becomes clogged and is periodically removed by nozzle 8 below the surface of the mixture and removed via suction nozzle and discharge pipe 9. The loose material which has been removed thus has to be prevented from becoming mixed with the mixture in the trough 2 which is not the case in the present invention.

It is an object of the present invention to provide an improved method for thickening lime sludge.

According to the present invention there is provided a method of thickening lime sludge with a drum filter according to which method the lime sludge is thickened on a precoat filter layer of the lime sludge formed on the surface of a filter drum which is partially immersed in a vat containing lime sludge, characterized in that the precoat filter layer is subject to a liquid jet from above the surface of the lime sludge in the vat for removing a strip at a time from the precoat filter layer by means of said liquid jet reciprocating continuously in the longitudinal direction of the drum.

High-pressure nozzles, two far example, are provided under the scraper in such a way that one of the nozzles breaks the precoat and drops it into the vat and the other nozzle washes the filter cloth clean. The pressure of the water in the nozzles is approx. 50 - 100 bar which gives a very good cleaning effect. The nozzle spreads the jet in such a way that the precoat is removed from a strip of 10 - 50 mm in width and the same area of filter cloth is washed at a time.

The washing nozzles are installed in a rack designed for displacing the nozzles in the lateral direction. The nozzles are continuously reciprocated in the longitudinal direction of extension of the drum which continuously renews the precoat and washes the filter cloth.

Advantages of continuous high-pressure water scraping are:-
- the dry-solids content of the lime sludge from the lime sludge filter to the lime sludge reburning kiln is maintained continuously uniform which allows constant operation of the kiln;
- change of precoat is not necessary as the precoat is renewed continuously a strip at a time. Disturbances in the reburning kiln due to a change of precoat are avoided.
- there is no need to interrupt filtering for washing of the filter cloth.

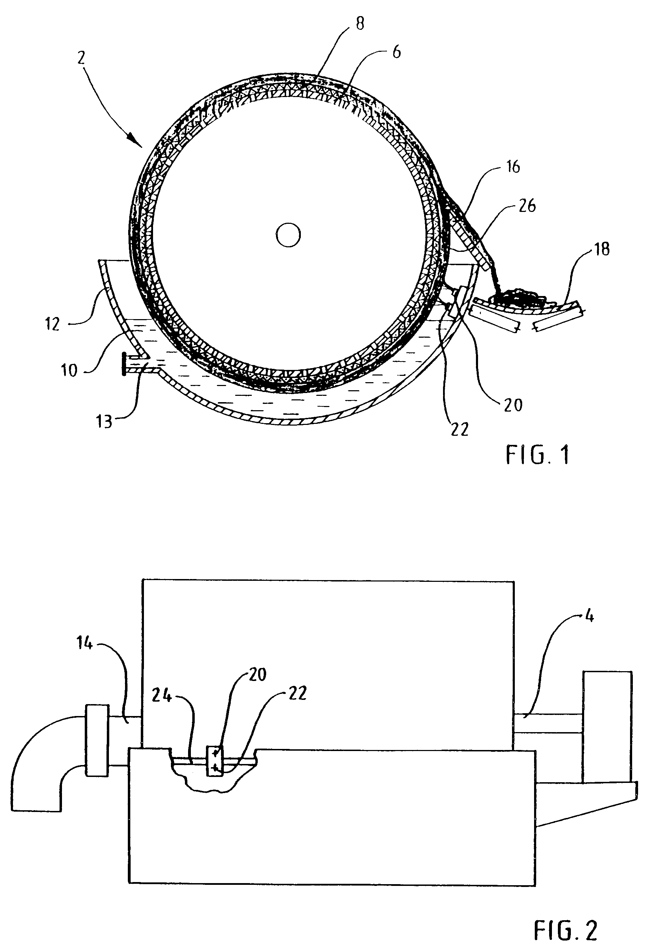

The invention is described more closely, by way of example, with reference to the accompanying drawing which illustrates schematically an embodiment of the invention and in which:-
Fig. 1 is a cross-sectional view of the apparatus; and
Fig. 2 is a side view of the apparatus partly in section.

The Figures illustrate a drum vacuum filter comprising a drum 2 mounted on a shaft 4. The shell of the drum is composed of a perforated plate 6 covered with a filter cloth 8. The drum is partly immersed in a vat 12 containing lime sludge 10, the vat being provided with an inlet 13 via which lime sludge is introduced into the vat with a dry-solids content of 20 - 25 % for filtering. The drum is connected to a vacuum system via an end of the shaft, i.e. the hollow end 14, by a method known per se.

A scraper 16 is provided adjacent to the drum, extending from one end of the drum to the other, for removing dried lime sludge from the surface of the drum and for guiding it onto an adjacent belt conveyor 18 which transports it to a lime sludge reburning kiln.

There are two high-pressure washer nozzles 20 and 22 disposed one on top of the other and under the scraper and both mounted to be reciprocally displaceable along a bar 24 extending in the longitudinal direction of the drum. The nozzles are connected by a method known per se to a drive means (not illustrated) which continuously reciprocate such in the longitudinal direction of the drum from its one end to the other.

When the drum rotates down into the lime sludge in the vat the lime sludge adheres in a layer onto the filter cloth. The partial vacuum in the drum provides the pressure difference which extracts liquid from the lime sludge through the filter cloth. When the immersed surface of the drum is rotated up from the lime sludge the partial vacuum results in liquid extraction from the lime sludge layer whereby the dry-solids content of the lime sludge increases remarkably. The liquid separated from the lime sludge, i.e. white liquor, is removed via the hollow shaft of the drum.

The thickening of lime sludge is preferably performed by means of a precoat layer 26 formed on the surface of a filter drum, i.e. the thickening takes place through both the filter cloth and a filtering lime sludge layer formed on the filter cloth. The scraper 16 scrapes lime sludge of a dry-solids content of 70 - 85 % from the surface of the precoat and drops it onto a belt conveyor 18. The tip of the scraper 16 is kept at a certain constant distance from the surface of the drum so as to maintain a precoat thickness of approx. 10 - 15 mm.

During each rotation of the drum, the displaceable nozzles 20 and 22 move under the scraper and remove a part of the precoat layer. The water jet from the upper nozzle 20 breaks the precoat and causes it to drop into the vat 12 and the lower nozzle 22 washes the filter cloth clean. The nozzles are provided with such a high pressure, for example 100 bar, that a good cleaning effect is achieved. The nozzles spread the water jet in such a way that the precoat is removed from a strip of 50 mm in width at a time and the same area of filter cloth is washed at a time.

## Claims

1. A method of thickening lime sludge with a drum filter according to which method the lime sludge is thickened on a precoat filter layer of the lime sludge formed on the surface of a filter drum which is partially immersed in a vat containing lime sludge, characterized in that the precoat filter layer is subject to a liquid jet from above the surface of the lime sludge in the vat for removing a strip at a time from the precoat filter layer by means of said liquid jet reciprocating continuously in the longitudinal direction of the drum.

2. A method as claimed in claim 1, characterized in that the removed portion of the filtering layer drops into the vat.

3. A method as claimed in claim 2, characterized in that the filtering layer is broken with one liquid jet and the surface of the filter drum cleaned with another liquid jet.

4. A method as claimed in claim 3, characterized in that the filtering layer is broken and the surface of the drum cleaned with a high-pressure liquid jet.

5. A method as claimed in claim 4, characterized in that the pressure of the liquid in the nozzles is 50 - 100 bar.

6. A method as claimed in any of the preceding claims, characterized in that a strip of 50 mm in width of the filtering layer is removed and the same area of the filter drum is cleaned at a time.

## Patentansprüche

1. Verfahren zur Eindickung von Kalkschlamm mit einem Trommelfilter, nach welchem Verfahren der Kalkschlamm auf einer aus dem Kalkschlamm gebildeten Precoat-Schicht auf der Oberfläche einer Trommel gebildet wird, die teilweise in einen Kalkschlamm enthaltenden Behälter hineintaucht, dadurch gekennzeichnet, daß die Precoat-Filterschicht einem Flüssigkeitsstrahl von oberhalb der Oberfläche des Kalkschlamms im Behälter auf solche Weise ausgesetzt ist zur Entfernung jeweils eines Streifens von der Precoat-Schicht mittels des Flüssigkeitsstrahls, der sich kontinuierlich in der Längsrichtung der Trommel hin und her bewegt.

2. Verfahren nach Anspruch 1, dadurch gekennzeichnet, daß der entfernte Teil der Filtrierschicht in den Behälter hineinfällt.

3. Verfahren nach Anspruch 2, dadurch gekennzeichnet, daß die Filterungsschicht mit einem Flüssigkeitsstrahl aufgebrochen wird und die Oberfläche der Filtertrommel mit einem anderen Flüssigkeitsstrahl gereinigt wird.

4. Verfahren nach Anspruch 3, dadurch gekennzeichnet, daß daß die Filterungsschicht mit einem Flüssigkeitsstrahl aufgebrochen wird und die Oberfläche der Filtertrommel mit einem anderen Flüssigkeitsstrahl gereinigt wird.

5. Verfahren nach Anspruch 4, dadurch gekennzeichnet, daß der Druck der Flüssigkeit in den Düsen bei 50 bis 100 bar liegt.

6. Verfahren nach einem der vorhergehenden Ansprüche, dadurch gekennzeichnet, daß ein 50 mm breiter Streifen der Filterungsschicht entfernt und der gleiche Bereich der Filtertrommel gleichzeitig gewaschen wird.

## Revendications

1. Procédé d'épassissement de la boue résiduaire de chaux avec un filtre à tambour, suivant lequel la boue résiduaire de chaux est épaissie sur une sous-couche filtrante de la boue de caustification formée sur la surface d'un tambour filtrant qui est partiellement immergé dans une cuve contenant de la boue résiduaire de chaux, caractérisé en ce que la sous-couche filtrante est soumise à un jet de liquide provenant d'en haut de la surface de la boue résiduaire dans la cuve afin d'enlever une bande à la fois de la sous-couche filtrante au moyen dudit jet de liquide qui actionne en continu un mouvement alternatif dans la direction longitudinale du tambour.

2. Procédé selon la revendication 1, caractérisé en ce que la portion enlevée de la couche filtrante tombe dans la cuve.

3. Procédé selon la revendication 2, caractérisé en ce que la couche filtrante est brisée avec un jet de liquide et la surface du tambour filtrant est nettoyée à l'aide d'un autre jet de liquide.

4. Procédé selon la revendication 3, caractérisé en ce que la couche filtrante est brisée et la surface du tambour est épurée à l'aide d'un jet de liquide à haute pression.

5. Procédé selon la revendication 4, caractérisé en ce que la pression du liquide dans les buses est de 50 - 100 bars.

6. Procédé selon l'une quelconque des revendications précédentes, caractérisé en ce que une bande, qui fait 50 mm de large, de la couche filtrante est enlevée et la même étendue du tambour filtrant est nettoyée à la fois.
